# EUROPÄISCHE PATENTSCHRIFT

(11) **EP 0 935 831 B1**
(45) Veröffentlichungstag und Bekanntmachung des Hinweises auf die Patenterteilung: **13.12.2000**
(21) Anmeldenummer: 97950025.3
(22) Anmeldetag: 24.10.1997
(51) Int. Cl.: H01S 3/036, H01S 3/07

(54) **GASLASERANORDNUNG**
GAS LASER DEVICE
DISPOSITIF LASER A GAZ

(30) Priorität: 30.10.1996 DE 29618887 U
(43) Veröffentlichungstag der Anmeldung: 18.08.1999
(73) Patentinhaber: Trumpf GmbH & Co, D-71254 Ditzingen (DE)
(72) Erfinder: VON BORSTEL, Michael, D-74385 Pleidelsheim (DE); HENSCHLER, Detlef, D-71254 Ditzingen (DE)
(74) Vertreter: Patentanwälte Dipl.-Ing. B. Schmid Dr.-Ing. G.A. Birn Dipl.-Ing. H. Quarder
(86) Internationale Anmeldenummer: EP9705891
(87) Internationale Veröffentlichungsnummer: WO9819373

(56) Entgegenhaltungen:
- EP-A- 0 073 992
- DE-U- 29 618 887
- GB-A- 2 020 890

## Beschreibung

Die Erfindung betrifft eine Gaslaseranordnung mit wenigstens einem von Lasergas in Strömungsrichtung durchströmten Laserentladungsrohr mit Entladungsrohrachse, in welchem zumindest ein Laserstrahl verläuft sowie mit wenigstens einer in das Laserentladungsrohr mündenden Zufuhrleitung für Lasergas, über welche das Laserentladungsrohr mit einer Druckquelle für Lasergas, beispielsweise einer Lasergaspumpe, in Verbindung steht und das Lasergas in das Laserentladungsrohr eingeleitet wird, wobei in der Zufuhrleitung wenigstens eine wendelartige und um einen freien Querschnitt zum Durchlaß des Laserstrahls verlaufende Führung für das Lasergas mit einer in dessen Strömungsrichtung verlaufenden Wendelachse vorgesehen ist und wobei dem Laserentladungsrohr über die wendelartige Führung wenigstens ein Teil des Lasergases zugeführt wird.

Eine gattungsgemäße Gaslaseranordnung ist beschrieben in EP 0 073 992 A2. Der Entladungsraum im Innern des Laserentladungsrohres der vorbekannten Anordnung erstreckt sich in Richtung der Entladungsrohrachse und besitzt einen ringartigen Querschnitt. An den axialen Enden dieses Ringraumes angeordnete Spiegel dienen der mehrfachen Umlenkung des gebildeten Laserstrahls, welcher stets mit radialem Abstand von der Entladungsrohr- bzw. von der Ringraumachse verläuft. Lasergas wird dem Entladungsraum der Anordnung nach EP 0 073 992 A2 über Leitbleche zugeführt, die eine Führung für das Lasergas bilden und dieses auf einer schraubenförmigen Bahn durch das Innere des Entladungsraumes lenken. Infolgedessen kreuzt der Lasergasstrom mehrfach den Weg des erzeugten Laserstrahls. Ausweislich EP 0 073 992 A2 dient die beschriebene Führung des Lasergasstromes der Gewährleistung einer hohen Laserleistung.

Eine Gaslaseranordnung mit einem Laserentladungsrohr, in dessen Entladungsraum eine wendelartige Lasergasführung untergebracht ist, offenbart GB 2 020 890 A . Auch in diesem Fall verläuft der erzeugte Laserstrahl radial beabstandet von der Entladungsrohrachse. Dabei durchsetzt der Laserstrahl Öffnungen in Leitblechen der wendelartigen Lasergasführung, die mit Abstand von der Entladungsrohrachse vorgesehen sind.

Im Falle einer weiteren bekannten Gaslaseranordnung zirkuliert das Lasergas gefördert mittels einer Lasergaspumpe, wobei sowohl im Vorlauf zwischen der Lasergaspumpe und dem zugeordneten Laserentladungsrohr, d.h. in der Zufuhrleitung für das Lasergas, als auch im Rücklauf zwischen dem Laserentladungsrohr und der Lasergaspumpe ein Wärmetauscher vorgesehen ist, mittels dessen das bei Betrieb der Laseranordnung im Innern des Laserentladungsrohres aufgeheizte Lasergas gekühlt wird. Die Einleitung des gekühlten Lasergases in das Laserentladungsrohr erfolgt über einen rohrartigen Abschnitt der Zufuhrleitung, dessen Rohrachse in einer Ebene mit der Entladungsrohrachse liegt und senkrecht zu dieser verläuft.

Da die Zufuhrleitung zumindest mit dem vorstehend beschriebenen rohrartigen Abschnitt unter einem Winkel zu dem zugehörigen Laserentladungsrohr verläuft, ist die Einleitung des Lasergases in das Laserentladungsrohr mit einer Strömungsumlenkung, nämlich mit einer Umlenkung in die Strömungsrichtung im Innern des Entladungsrohres, verbunden. Dadurch bedingt stellen sich zumindest in den der Mündung der Zufuhrleitung benachbarten Bereichen des Laserentladungsrohres über dessen Querschnitt betrachtet für das Lasergas ungleichförmige Strömungsverhältnisse ein, die ein ungleichförmiges Strahlintensitätsprofil, d.h. eine ungleichförmige Verteilung der Laserstrahlleistung, über den Querschnitt des Laserentladungsrohres zur Folge haben.

Eine Verbesserung der Verteilung der Laserstrahlleistung über den Querschnitt des betreffenden Entladungsrohres zu ermöglichen, hat sich die vorliegende Erfindung zum Ziel gesetzt.

Erfindungsgemäß gelöst ist diese Aufgabe an einer Gaslaseranordnung mit den eingangs angegebenen Merkmalen, im Falle derer die Wendelachse der wendelartigen Führung, die optische Achse des Laserstrahls sowie die Entladungsrohrachse miteinander zusammenfallen. Infolge der in Patentanspruch 1 genannten Merkmale ergeben sich insbesondere im Bereich der Mündung der Zufuhrleitung in das Laserentladungsrohr sowie in dem diesem Bereich benachbarten Abschnitt des Laserentladungsrohres Strömungsverhältnisse für das Lasergas, aufgrund derer sich eine Verteilung der Laserstrahlleistung über den Entladungsrohrquerschnitt einstellt, welche relativ gleichmäßig ist. Die an sich bekannte wendelartige Führung zeichnet sich dadurch aus, daß eine verhältnismäßig lange Leitstrecke für das Lasergas bei kleinem Bauvolumen zur Verfügung steht.

Es bietet sich eine Mehrzahl von Möglichkeiten, die wendelartige Führung für das Lasergas zu realisieren. So kann die Führung durch eine entsprechend ausgedrehte Form der Führungsbahn oder durch Einlegen eines zusätzlichen wendelförmigen Führungselementes in die Zufuhrleitung gebildet sein. Denkbar ist beispielsweise die Verwendung eines entsprechenden schrauben- oder spiralförmig gestalteten Führungsrohres. Als wendelartige Führung für das Lasergas bevorzugt wird erfindungsgemäß ein entsprechender, zu dem freien Querschnitt zum Durchlaß des Laserstrahls hin offener Führungskanal. Aufgrund seiner Geometrie ist ein derartiger Führungskanal vergleichbar mit einem Leitgewinde bzw. einem Leitgewindeabschnitt.

Damit die angestrebte Führungswirkung mit optimalem Ergebnis erzielt werden kann, ist die Tiefe eines derartigen Leitgewindes verhältnismäßig groß zu wählen. Erfindungsgemäß vorgesehen ist, daß die Tiefe des Führungskanals wenigstens ein Viertel des Durchmessers des zugeordneten Laserentladungsrohres beträgt.

In Weiterbildung der Erfindung ist vorgesehen, daß die wendelartige Führung für das Lasergas wenigstens eine entsprechende Führungswendel auf der Innenwandung der Zufuhrleitung für Lasergas umfaßt. Durch Gestaltung und Ausrichtung der Führungswendel können die sich ergebenden Strömungsverhältnisse beeinflußt werden.

Eine bevorzugte Ausführungsform der erfindungsgemäßen Gaslaseranordnung zeichnet sich dadurch aus, daß die wendelartige Führung für das Lasergas an der Innenwandung eines zumindest einen Teil der Zufuhrleitung für das Lasergas bildenden und dem zugeordneten Laserentladungsrohr in Strömungsrichtung des Lasergases vorgesetzten Leitrohres vorgesehen ist. Aufgrund der beschriebenen funktionalen Trennung von Laserentladungsrohr und Leitrohr ist dafür gesorgt, daß die Lasergasströmung, sobald sie in denjenigen Bereich der Laseranordnung gelangt, in welchem die Entladung stattfindet, bereits optimiert ist. Außerdem besteht die Möglichkeit, unterschiedlich ausgebildete Leitrohre mit ein und demselben Laserentladungsrohr zu kombinieren.

Damit innerhalb des Leitrohres bereits nach möglichst kurzer Strömungsweglänge der Lasergasstrom die angestrebte Strömungsrichtung nimmt, ist erfindungsgemäß vorgesehen, daß das Leitrohr einen bezüglich seines Querschnitts tangentialen Einlaß für das Lasergas aufweist, an welchen sich in Strömungsrichtung des Lasergases die wendelartige Führung für letzteres anschließt. Durch die genannten Merkmale wird eine unerwünschte Verwirbelung bei Eintreten des Lasergases in das Leitrohr vermieden und dadurch die Voraussetzung dafür geschaffen, daß die Lasergasströmung zu ihrer Ausrichtung einer Führung über eine lediglich kurze Wegstrecke bedarf.

In diesem Sinne ist im Falle einer weiteren Variante der Erfindung von dem Merkmal Gebrauch gemacht, daß der Einlaß für das Lasergas an dem Leitrohr als rohrartige Einlaßleitung ausgebildet ist und die Achse der Einlaßleitung in Richtung des sich an die Einlaßleitung anschließenden Abschnittes der wendelartigen Führung verläuft. Auch auf diese Art und Weise können unerwünschte Ungleichförmigkeiten beim Eintreten des Lasergases in das Leitrohr vermieden werden, die gegebenenfalls die Erzeugung optimierter Strömungsverhältnisse in dem stromabwärts des Leitrohrs angeordneten Laserentladungsrohr erschweren würden.

Erfindungsgemäß kann die wendelartige Führung eingängig ausgebildet sein. In bevorzugter Ausgestaltung ist allerdings eine mehrgängige wendelartige Führung vorgesehen.

Die sich einstellenden Strömungsverhältnisse lassen sich durch die Geometrie der wendelartigen Führung beeinflussen. Konstruktiv besonders einfache Ausführungsformen ergeben sich, wenn die wendelartige Führung mit einem konstanten Durchmesser des freien Querschnitts zum Durchlaß des Laserstrahls und/oder mit einer konstanten Wendelsteigung ausgebildet ist. Bei konstantem Durchmesser des freien Querschnitts der wendelartigen Führung besitzt die Führungsbahn einen schraubenförmigen Verlauf. Wie bereits oben ausgeführt, kann die Führungsbahn erforderlichenfalls aber auch Spiralform aufweisen und sich dann der Durchmesser des freien Querschnitts der wendelartigen Führung in Richtung der Wendelachse verändern. Entsprechend läßt sich erfindungsgemäß auch die Wendelsteigung in Richtung der Wendelachse veränderlich wählen.

Nachfolgend wird die Erfindung anhand schematischer Darstellungen zu Ausführungsbeispielen näher erläutert. Es zeigen:
- Fig. 1: eine Gesamtansicht einer sogenannten "gefalteten" Gaslaseranordnung,
- Fig. 2: eine Schnittdarstellung des Eckbereichs II gemäß Fig. 1 mit zwei Leitrohren,
- Fig. 3: einen Schnitt entlang der in Fig. 2 senkrecht zu der Zeichenebene in Richtung der Linie III-III verlaufenden Schnittebene,
- Fig. 4: eine Schnittdarstellung eines der Leitrohre gemäß Fig. 2,
- Fig. 5: das Leitrohr gemäß Fig. 4 in der Draufsicht in Richtung des Pfeiles V in Fig. 4 und
- Fig. 6: eine Gesamtansicht einer weiteren.Ausführungsform einer Gaslaseranordnung.

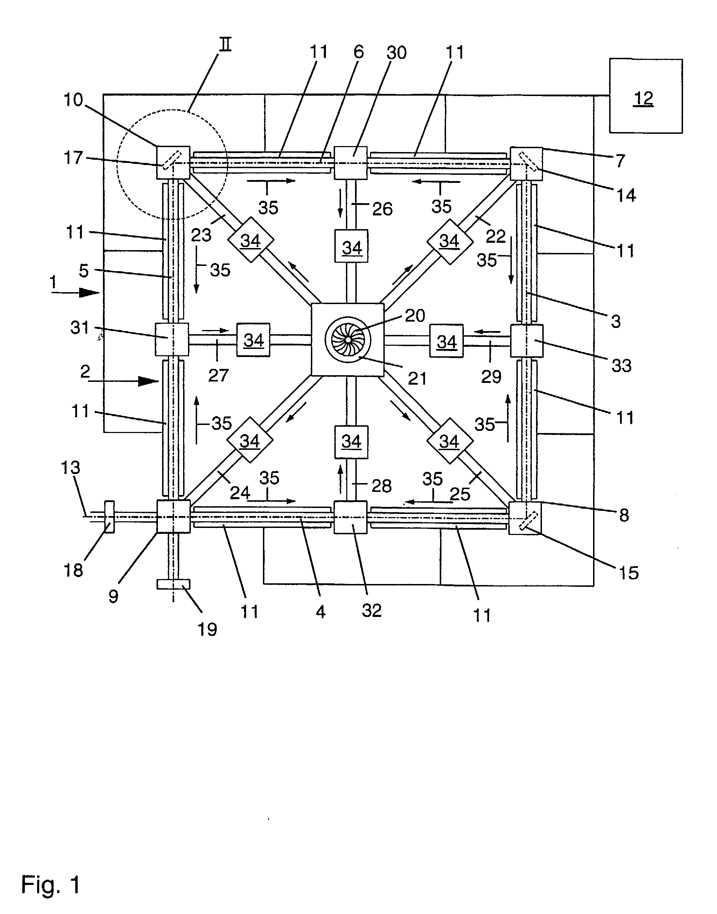

Gemäß Fig. 1 umfaßt eine Gaslaseranordnung 1 eine quadratisch gefaltete Laserentladungseinheit 2 mit vier sich aneinander anschließenden Laserentladungsrohren 3, 4, 5, 6. Letztere sind über Eckgehäuse 7, 8, 9, 10 miteinander verbunden und tragen auf ihren Außenwandungen einander jeweils paarweise zugeordnete Elektroden 11, die an einen Hochfrequenzgenerator 12 angeschlossen sind. Ein in Richtung der Achsen der Laserentladungsrohre 3, 4, 5, 6 verlaufender Laserstrahl 13 ist in Fig. 1 strichpunktiert angedeutet. Umlenkspiegel 14, 15, 17 in den Eckgehäusen 7, 8, 10 dienen der Umlenkung des Laserstrahls 13 um jeweils 90°. An einem Auskoppelspiegel 18 wird der Laserstrahl 13 ausgekoppelt. Dem Auskoppelspiegel 18 benachbart ist in bekannter Art und Weise ein Rückspiegel 19.

Im Zentrum der gefalteten Laserentladungseinheit 2 ist als Druckquelle für Lasergas ein Radialgebläse 20 angeordnet, das von einem Gebläsemotor 21 angetrieben wird und über Zufuhrleitungen 22, 23, 24, 25 für Lasergas mit den Eckgehäusen 7, 8, 9, 10 in Verbindung steht. Saugleitungen 26, 27, 28, 29 verlaufen zwischen Absauggehäusen 30, 31, 32, 33 und dem Radialgebläse 20. Wärmetauscher 34 sind sowohl in die Zufuhrleitungen 22, 23, 24, 25 als auch in die Saugleitungen 26, 27, 28, 29 eingeschaltet. Die Strömungsrichtung des Lasergases im Innern der Laserentladungsrohre 3, 4, 5, 6 ist durch Pfeile 35 veranschaulicht. Weitere Pfeile symbolisieren die Strömungsrichtung des Lasergases in den Zufuhrleitungen 22, 23, 24, 25 sowie in den Saugleitungen 26, 27, 28, 29.

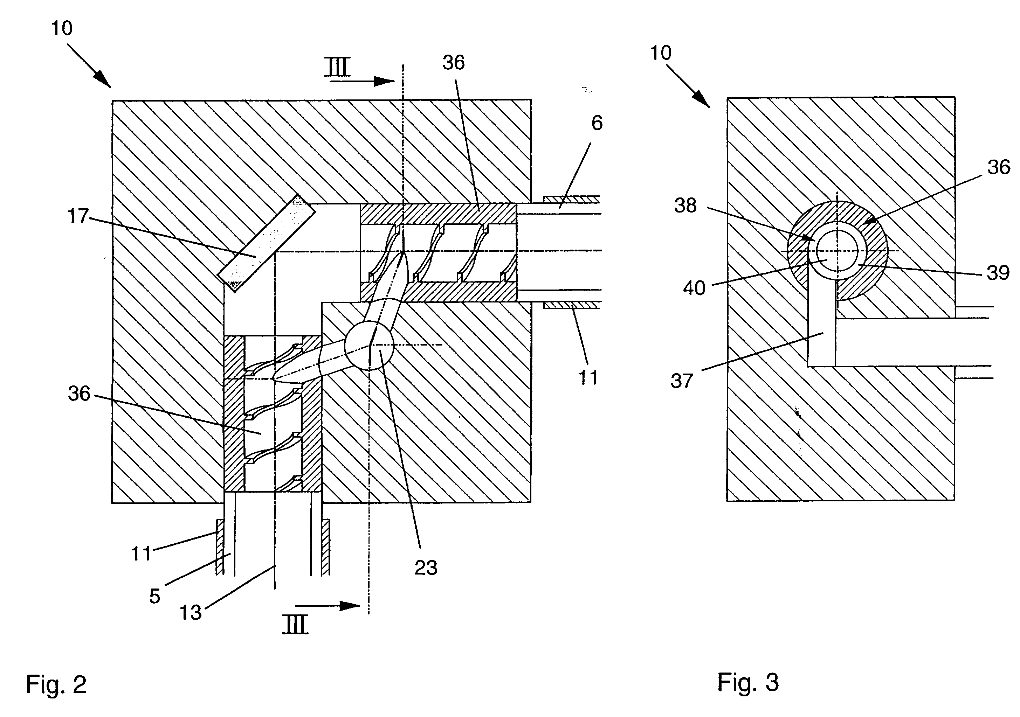

Ausgehend von dem Radialgebläse 20 wird Lasergas durch die Zufuhrleitungen 22, 23, 24, 25 über den jeweiligen Wärmetauscher zu den Eckgehäusen 7, 8, 9, 10 gefördert. Dort wird, wie aus Fig. 2 hervorgeht, der Lasergasstrom in zwei Teilströme aufgespalten, von denen jeder einem Leitrohr 36 zugeführt wird. Die Leitrohre 36 sind Bestandteile der jeweiligen Zufuhrleitung 22, 23, 24, 25. Gemäß Fig. 3 erfolgt die Zufuhr des jeweiligen Lasergasteilstroms in das betreffende Leitrohr 36 jeweils über eine rohrartige tangentiale Einlaßleitung 37. Jedes Leitrohr 36 ist in Strömungsrichtung 35 des Lasergases einem Laserentladungsrohr vorgesetzt. In Fig. 2 gezeigt sind die Laserentladungsrohre 5, 6 mit ihren zugeordneten Leitrohren 36 im Eckgehäuse 10. Einander an ein und demselben Laserentladungsrohr 3, 4, 5, 6 gegenüberliegende Leitrohre 36 sind bezüglich einer senkrecht zu der Zeichenebene von Fig. 1 sowie senkrecht zu der jeweiligen Entladungsrohrachse verlaufenden Ebene spiegelbildlich gestaltet.

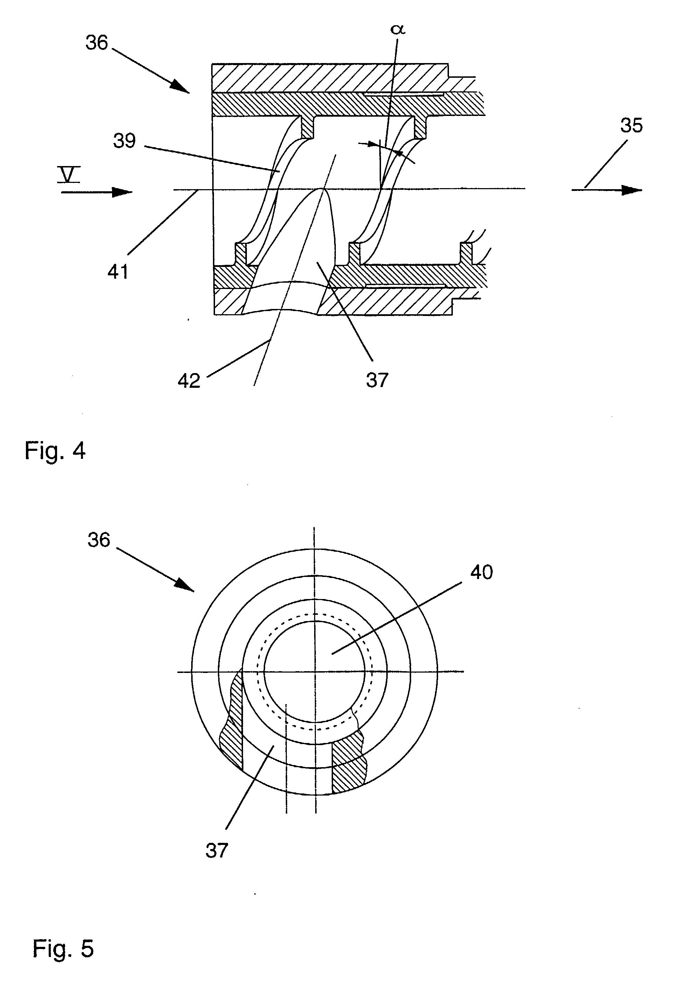

Gemäß Fig. 3 ist im Innern jedes Leitrohres 36 eine wendelartige Führung 38 für das Lasergas angeordnet. Diese umfaßt eine auf der Innenwandung des Leitrohres 36 angebrachte Führungswendel 39, die um einen freien Querschnitt 40 zum Durchlaß des Laserstrahls 13 verläuft. Die benachbarten Gangabschnitte der Führungswendel 39 begrenzen einen Führungskanal für Lasergas, der zu dem freien Querschnitt 40 hin offen ist und die Gestalt eines Leitgewindes aufweist. Die Achse 41 der Führungswendel 39 fällt mit der Achse des nachgeschalteten Laserentladungsrohres sowie der Achse des Laserstrahls 13 zusammen. Die Achse 42 der tangentialen Einlaßleitung 37 ist gemäß Fig. 4 gegen die Vertikale geneigt und verläuft in Richtung des sich an die tangentiale Einlaßleitung 37 anschließenden Abschnittes der Führungswendel 39. Der Durchmesser der Führungswendel 39 und somit der wendelartigen Führung 38, sprich: der freie Querschnitt 40 zum Durchlaß des Laserstrahls 13, ist in Richtung der Achse 41 der Führungswendel 39 konstant. Entsprechendes gilt für die Steigung der Führungswendel 39, die in Fig. 4 durch einen Steigungswinkel α angedeutet ist.

Beim Eintritt in das Leitrohr 36 wird der betreffende, von dem Radialgebläse 20 geförderte Lasergasteilstrom über die tangentiale Einlaßleitung 37 in Richtung des sich daran anschließenden Abschnittes der Führungswendel 39 gelenkt. Diese wiederum leitet zumindest den radial außenliegenden und der Wand des Leitrohres 36 benachbarten Teil des Lasergasteilstroms auf einer schraubenförmigen Bahn in Richtung auf das nachgeschaltete Laserentladungsrohr, in welches der Lasergasteilstrom dann mit einem entsprechenden Drall eintritt. Aufgrund der sich dadurch einstellenden Strömungsverhältnisse im Innern der Laserentladungsrohre 3, 4, 5, 6 ergibt sich über deren Querschnitt eine gleichmäßige Verteilung der Laserstrahlleistung.

Jeder über ein Leitrohr 36 in das nachgeschaltete Laserentladungsrohr aufgegebene Lasergasteilstrom vereinigt sich gemäß Fig. 1 im Innern eines der Absauggehäuse 30, 31, 32, 33 mit dem über das Leitrohr 36 des an demselben Laserentladungsrohr gegenüberliegenden Eckgehäuses eingeleiteten Lasergasteilstrom. Die vereinigten Teilströme werden dann über die Saugleitungen 26, 27, 28, 29 und die in diese eingeschalteten Wärmetauscher 34 dem Radialgebläse 20 zugeführt.

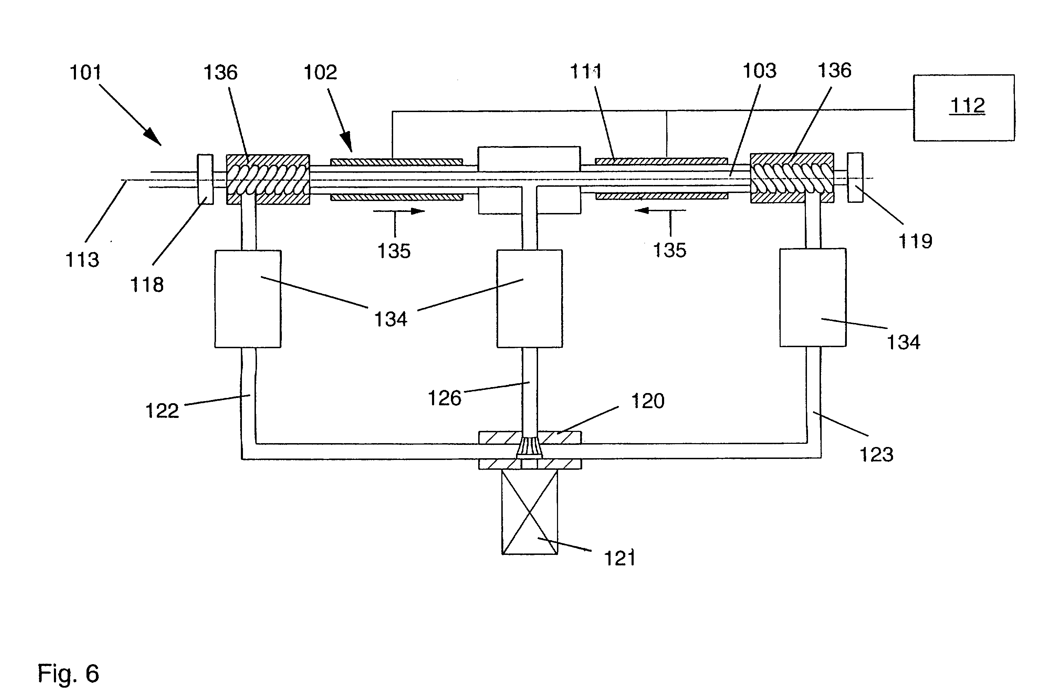

Fig. 6 zeigt eine Gaslaseranordnung 101, die anstelle der gefalteten Ladungseinheit 2 gemäß Fig. 1 eine geradlinige Entladungseinheit 102 mit einem einzigen Laserentladungsrohr 103 umfaßt. Im Innern des Laserentladungsrohres 103 verläuft ein Laserstrahl 113, der über einen Auskoppelspiegel 118 ausgekoppelt wird. Dem Auskoppelspiegel 118 gegenüber liegt ein Rückspiegel 119. Mittels eines Hochfrequenzgenerators 112 wird an Elektroden 111 auf der Außenwand des Laserentladungsrohrs 103 die benötigte Spannung angelegt.

Eine Druckquelle für Lasergas in Form eines Radialgebläses 120 führt über Zufuhrleitungen 122, 123 dem Inneren des Laserentladungsrohres 103 Lasergas zu und saugt aus letzterem erhitztes Lasergas über eine Saugleitung 126 ab. Die Strömungsrichtung des Lasergases im Innern des Laserentladungsrohres 103 ist durch Pfeile 135 symbolisiert. In die Zufuhrleitungen 122, 123 sowie in die Saugleitung 126 ist jeweils ein Wärmetauscher 134 eingeschaltet. Die adäquate Ausrichtung von in das Laserentladungsrohr 103 aufgegebenen Lasergasteilströmen erfolgt in der zu den Fign. 1 bis 5 beschriebenen Art und Weise unter Verwendung von entsprechenden Leitrohren 136 mit wendelartigen Führungen für das Lasergas.

Die wendelartige Führung für das Lasergas kann auch durch Einlegen eines wendelartigen Elementes in Form einer Schraubenfeder oder einer Kühlwendel gebildet und/oder durch ein gelochtes Rohr gegen den freien Querschnitt zum Durchlaß des Laserstrahls abgegrenzt sein.

## Patentansprüche

1. Gaslaseranordnung mit wenigstens einem von Lasergas in Strömungsrichtung (35, 135) durchströmten Laserentladungrohr (3, 4, 5, 6; 103) mit Entladungsrohrachse, in welchem zumindest ein Laserstrahl (13, 113) verläuft sowie mit wenigstens einer in das Laserentladungsrohr (3, 4, 5, 6; 103) mündenden Zufuhrleitung (22, 23, 24, 25; 122, 123) für Lasergas, über welche das Laserentladungsrohr (3, 4, 5, 6; 103) mit einer Druckquelle (20, 120) für Lasergas, beispielsweise einer Lasergaspumpe, in Verbindung steht und das Lasergas in das Laserentladungsrohr (3, 4, 5, 6; 103) eingeleitet wird, wobei in der Zufuhrleitung (22, 23, 24, 25; 122, 123) wenigstens eine wendelartige und um einen freien Querschnitt (40) zum Durchlaß des Laserstrahls (13, 113) verlaufende Führung (38) für das Lasergas mit einer in dessen Strömungsrichtung (35, 135) verlaufenden Wendelachse (41) vorgesehen ist und wobei dem Laserentladungsrohr (3, 4, 5, 6; 103) über die wendelartige Führung (38) wenigstens ein Teil des Lasergases zugeführt wird, dadurch gekennzeichnet, daß die Wendelachse (41) der wendelartigen Führung (38), die optische Achse des Laserstrahls (13, 113) sowie die Entladungsrohrachse miteinander zusammenfallen.

2. Gaslaseranordnung nach Anspruch 1, dadurch gekennzeichnet, daß die wendelartige Führung (38) für das Lasergas als entsprechender, zu dem freien Querschnitt (40) zum Durchlaß des Laserstrahls (13, 113) hin offener Führungskanal ausgebildet ist.

3. Gaslaseranordnung nach einem der vorhergehenden Ansprüche, dadurch gekennzeichnet, daß die Tiefe des Führungskanals wenigstens ein Viertel des Durchmessers des zugeordneten Laserentladungsrohres (3, 4, 5, 6; 103) beträgt.

4. Gaslaseranordnung nach einem der vorhergehenden Ansprüche, dadurch gekennzeichnet, daß die wendelartige Führung (38) für das Lasergas wenigstens eine entsprechende Führungswendel (39) auf der Innenwandung der Zufuhrleitung (22, 23, 24, 25; 122, 123) für Lasergas umfaßt.

5. Gaslaseranordnung nach einem der vorhergehenden Ansprüche, dadurch gekennzeichnet, daß die wendelartige Führung (38) für das Lasergas an der Innenwandung eines zumindest einen Teil der Zufuhrleitung (22, 23, 24, 25; 122, 123) für das Lasergas bildenden und dem zugeordneten Laserentladungsrohr (3, 4, 5, 6; 103) in Strömungsrichtung (35, 135) des Lasergases vorgesetzten Leitrohres (36, 136) vorgesehen ist.

6. Gaslaseranordnung nach einem der vorhergehenden Ansprüche, dadurch gekennzeichnet, daß das Leitrohr (36, 136) einen bezüglich seines Querschnitts tangentialen Einlaß für das Lasergas aufweist, an welchen sich in Strömungsrichtung des Lasergases die wendelartige Führung (38) für letzteres anschließt.

7. Gaslaseranordnung nach einem der vorhergehenden Ansprüche, dadurch gekennzeichnet, daß der Einlaß für das Lasergas an dem Leitrohr (36, 136) als rohrartige Einlaßleitung (37) ausgebildet ist und die Achse (42) der Einlaßleitung (37) in Richtung des sich an die Einlaßleitung (37) anschließenden Abschnitts der wendelartigen Führung (38) verläuft.

8. Gaslaseranordnung nach einem der vorhergehenden Ansprüche, dadurch gekennzeichnet, daß die wendelartige Führung (38) mehrgängig ausgebildet ist.

9. Gaslaseranordnung nach einem der vorhergehenden Ansprüche, dadurch gekennzeichnet, daß die wendelartige Führung (38) mit einem konstanten Durchmesser des freien Querschnitts (40) zum Durchlaß des Laserstrahls (13, 113) ausgebildet ist.

10. Gaslaseranordnung nach einem der vorhergehenden Ansprüche, dadurch gekennzeichnet, daß die wendelartige Führung (38) mit einer konstanten Wendelsteigung (α) ausgebildet ist.

## Claims

1. Gas laser arrangement having at least one laser discharge tube (3, 4, 5, 6; 103) through which laser gas passes in the direction of flow (35, 135) and which has a discharge tube axis and in which at least one laser beam (13, 113) projects and which has at least one supply line (22, 23, 24, 25; 122, 123) for laser gas which opens into the laser discharge tube (3, 4, 5, 6; 103) and by means of which the laser discharge tube (3, 4, 5, 6; 103) is connected to a pressure source (20, 120) for laser gas, for example, a laser gas pump, and the laser gas is directed into the laser discharge tube (3, 4, 5, 6; 103), there being provided in the supply line (22, 23, 24, 25; 122, 123) at least one helical guide (38) for the laser gas which extends around a free cross-section (40) for the passage of the laser beam (13, 113) and which has a helix axis (41) which extends in the direction of flow of the laser gas (35, 135), and at least a portion of the laser gas being supplied to the laser discharge tube (3, 4, 5, 6; 103) via the helical guide (38), characterised in that the helix axis (41) of the helical guide (38), the optical axis of the laser beam (13, 113) and the discharge tube axis coincide.

2. Gas laser arrangement according to claim 1, characterised in that the helical guide (38) for the laser gas is in the form of a corresponding guide channel which is open towards the free cross-section (40) for the passage of the laser beam (13, 113).

3. Gas laser arrangement according to either claim 1 or claim 2, characterised in that the depth of the guide channel is at least one-quarter of the diameter of the associated laser discharge tube (3, 4, 5, 6; 103).

4. Gas laser arrangement according to any one of the preceding claims, characterised in that the helical guide (38) for the laser gas comprises at least one corresponding guide helix (39) on the inner wall of the supply line (22, 23, 24, 25; 122, 123) for laser gas.

5. Gas laser arrangement according to any one of the preceding claims, characterised in that the helical guide (38) for the laser gas is provided on the inner wall of a guide tube (36, 136) which forms at least a portion of the supply line (22, 23, 24, 25; 122, 123) for the laser gas and which is upstream of the associated laser discharge tube (3, 4, 5, 6; 103) in the direction of flow (35, 135) of the laser gas.

6. Gas laser arrangement according to any one of the preceding claims, characterised in that the guide tube (36, 136) has an inlet for the laser gas, which inlet is tangential relative to the cross-section of the guide tube (36, 136) and which the helical guide (38) for the laser gas adjoins in the direction of flow of the laser gas.

7. Gas laser arrangement according to any one of the preceding claims, characterised in that the inlet for the laser gas at the guide tube (36, 136) is in the form of a tubular inlet line (37) and the axis (42) of the inlet line (37) extends in the direction of the portion of the helical guide (38) that adjoins the inlet line (37).

8. Gas laser arrangement according to any one of the preceding claims, characterised in that the helical guide (38) is in a form having a multiple thread.

9. Gas laser arrangement according to any one of the preceding claims, characterised in that the helical guide (38) is in a form having a constant diameter of the free cross-section (40) for the passage of the laser beam (13, 113).

10. Gas laser arrangement according to any one of the preceding claims, characterised in that the helical guide (38) is in a form having a constant helix pitch (α).

## Revendications

1. Dispositif laser à gaz, avec au moins un tube de décharge laser (3, 4, 5, 6 ; 103), traversé par du gaz pour laser dans la direction d'écoulement (35, 135) et présentant un axe de tube de décharge dans lequel s'étend au moins un faisceau laser (13, 113), ainsi qu'avec au moins une conduite (22, 23, 24, 25 ; 122, 123) d'alimentation en gaz pour laser, débouchant dans le tube de décharge laser (3, 4, 5, 6 ; 103) et par l'intermédiaire de laquelle le tube de décharge laser (3, 4, 5, 6 ; 103) est relié à une source de pression (20, 120) pour du gaz pour laser, par exemple une pompe de gaz pour laser, et le gaz pour laser est introduit dans le tube de décharge laser (3, 4, 5, 6 ; 103), au moins un guide (38) du genre hélice pour le gaz pour laser étant prévu dans la conduite d'alimentation (22, 23, 24, 25 ; 122, 123), guide qui s'étend autour d'une section libre (40) pour le passage du faisceau laser (13, 113) et qui présente un axe d'hélice (41) s'étendant dans la direction d'écoulement (35, 135) du gaz pour laser, et au moins une partie du gaz pour laser étant apportée au tube de décharge laser (3, 4, 5, 6 ; 103) par l'intermédiaire du guide (38) du genre hélice, **caractérisé** en ce que l'axe d'hélice (41) du guide (38) du genre hélice, l'axe optique du faisceau laser (13, 113) et l'axe du tube de décharge sont mutuellement coïncidents.

2. Dispositif laser à gaz selon la revendication 1, **caractérisé** en ce que le guide (38) du genre hélice pour le gaz pour laser est réalisé sous forme de canal de guidage correspondant, ouvert en direction de la section libre (40) pour le passage du faisceau laser (13, 113).

3. Dispositif laser à gaz selon une des revendications précédentes, **caractérisé** en ce que la profondeur du canal de guidage est égale à au moins un quart du diamètre du tube de décharge laser (3, 4, 5, 6 ; 103) associé.

4. Dispositif laser à gaz selon une des revendications précédentes, **caractérisé** en ce que le guide (38) du genre hélice pour le gaz pour laser comprend au moins une hélice de guidage correspondante (39) sur la paroi intérieure de la conduite (22, 23, 24, 25 ; 122, 123) d'alimentation en gaz pour laser.

5. Dispositif laser à gaz selon une des revendications précédentes, **caractérisé** en ce que le guide (38) du genre hélice pour le gaz pour laser est prévu sur la paroi intérieure d'un tube directeur (36, 136) formant au moins une partie de la conduite (22, 23, 24, 25 ; 122, 123) d'alimentation en gaz pour laser et précédant le tube de décharge laser (3, 4, 5, 6 ; 103) associé dans la direction d'écoulement (35, 135) du gaz pour laser.

6. Dispositif laser à gaz selon une des revendications précédentes, **caractérisé** en ce que le tube directeur (36, 136) présente une admission pour le gaz pour laser qui est tangentielle à la section dudit tube et à laquelle se raccorde, dans la direction d'écoulement du gaz pour laser, le guide (38) du genre hélice pour le gaz pour laser.

7. Dispositif laser à gaz selon une des revendications précédentes, **caractérisé** en ce que l'admission pour le gaz pour laser est réalisée sur le tube directeur (36, 136) sous forme de conduite d'admission tubulaire (37), et l'axe (42) de la conduite d'admission (37) s'étend dans la direction de la partie du guide (38) du genre hélice qui se raccorde à la conduite d'admission (37).

8. Dispositif laser à gaz selon une des revendications précédentes, **caractérisé** en ce que le guide (38) du genre hélice est réalisé à plusieurs spires.

9. Dispositif laser à gaz selon une des revendications précédentes, **caractérisé** en ce que le guide (38) du genre hélice est réalisé avec un diamètre constant de la section libre (40) pour le passage du faisceau laser (13, 113).

10. Dispositif laser à gaz selon une des revendications précédentes, **caractérisé** en ce que le guide (38) du genre hélice est réalisé avec un angle d'hélice constant (α).
